# EUROPÄISCHE PATENTSCHRIFT

(11) **EP 3 492 784 B1**
(45) Veröffentlichungstag und Bekanntmachung des Hinweises auf die Patenterteilung: **23.09.2020**
(21) Anmeldenummer: 17001970.7
(22) Anmeldetag: 30.11.2017
(51) Int. Cl.: F16J 15/10, F16L 23/18, F16J 15/12

(54) **DICHTRING AUS ELASTOMEREM WERKSTOFF MIT VERSTEIFUNGSEINLAGE**
SEALING RING MADE OF ELASTOMERIC MATERIAL WITH REINFORCED INLAY
BAGUE D'ÉTANCHÉITÉ EN MATÉRIAU ÉLASTOMÈRE POURVUE D'INSERT DE RIGIDIFICATION

(43) Veröffentlichungstag der Anmeldung: 05.06.2019
(73) Patentinhaber: Klinger AG, 6300 Zug (CH)
(72) Erfinder: Steffens, Robert, D-55124 Mainz (DE)
(74) Vertreter: Henseler, Daniela

(56) Entgegenhaltungen:
- EP-A2- 1 418 367
- DE-B- 1 023 736
- FR-A1- 2 827 638
- US-A1- 2006 181 032

## Beschreibung

Die Erfindung betrifft einen Dichtring aus elastomerem Werkstoff mit Versteifungseinlage für Flanschverbindungen im Behälter- und Rohrleitungsbau nach dem Oberbegriff des Anspruchs 1.

Wie in DE 10 2010 060 685 A1 beschrieben, werden Dichtringe aus einem elastomeren Werkstoff, in den eine Stahleinlage eingelegt ist, typischerweise an Rohrverbindungen eingesetzt, wobei an den Verbindungsstellen der Rohrinnenraum gegenüber der Umgebung abgedichtet wird. Aus der Praxis sind dazu Elastomer-Metall-Dichtringe bekannt, bei denen ein flacher, metallischer Träger vollständig von einem zusammenhängenden Elastomerkörper umgeben ist.

Bei diesen Dichtungen erfolgt die Abdichtung im Krafthauptschluss, das heißt die gesamte zwischen den zu verbindenden Teilen wirkende Flächenpressung liegt an dem Elastomerkörper an. Elastomer-Metall-Dichtringe mit einem Träger und einer vollständigen Ummantelung weisen deshalb ein erhebliches Setzverhalten auf, wobei die miteinander verbundenen Teile durch die Elastizität des Elastomerkörpers in einem gewissen Maße gegeneinander beweglich bleiben. Durch Änderung der Flächenpressung, Kippmomente oder dynamische Belastungen kann auch die Dichtwirkung beeinträchtigt werden. Insbesondere besteht die Gefahr, dass der Elastomerkörper überlastet wird.

Aus DE 1 023 736 AS ist ein als geschlossener Ring ausgebildeter Flachdichtungsring aus elastischem Werkstoff mit Stahleinlage bekannt, bei dem die von dem elastischen Werkstoff gebildete elastische Schicht in radialer Richtung verschiedene Dicken aufweist. Ein solcher Dichtring, bei dem die den eingelegten Ring aus einem steifen Werkstoff umgebende Gummischicht verschiedene Dicken aufweist, liefert eine elastische Reserve, um ein Undichtwerden weitgehend zu verhindern.

Beim Zusammenziehen der Leitungen infolge Kälteeinwirkung oder bei Biegebeanspruchungen kann sich ein solcher Dichtring in eingebautem Zustand infolge seiner großen elastischen Reserve genügend ausdehnen und sich jeder Änderung der Flächenpressung in einem Flansch ohne Weiteres anpassen. Die Verdickung kann dabei in der Mitte des Querschnitts des Dichtrings oder am inneren Durchmesser oder am äußeren Umfang des Dichtrings vorgesehen sein.

Bei diesen vorbekannten Dichtringen aus Elastomeren mit einer ringförmigen Stahleinlage hat die Stahleinlage die Funktion, als Stütz- und Montagehilfe zu dienen. Als vorteilhaft hat sich dies in vielen industriellen Anwendungen, z.B. Gas, Wasser, Chemie, usw., als sehr anwenderfreundlich erwiesen.

Als nachteilig erwiesen hat sich allerdings, dass das Umhüllen der dünnen, senkrecht zur Druckrichtung flach in der Ringebene liegenden Einlage mit üblicherweise rechteckigem Querschnitt aus steifem Werkstoff häufig zu herstellungsbedingten Lageverschiebungen der Einlage gegenüber einer zentrierten Position führt. Dies kann zu einer unsymmetrischen Stützfunktion des Dichtrings im Dichtungsspalt führen, was wiederum Undichtigkeiten zur Folge haben kann.

Aus US 3,531,133 ist deshalb ferner bekannt, die elastische Schicht kronenförmig überhöht in einem mittigen Abschnitt auszubilden, um ein deformierbares Dichtelement auszubilden. Der Materialbedarf an elastomerem als auch steifem Werkstoff ist dadurch jedoch hoch.

Aus US 2006/0181032 A1, FR 2 827 638 A1 und EP 1 418 367 A2 sind jeweils Flachdichtungsringe bekannt für die Herstellung einer fluiddichten Verbindung von zwei mit einer Anpresskraft gegeneinander abzudichtenden Flächen. Der Flachdichtungsring weist dabei einen elastisch verformbaren Grundring auf, an dessen innerem und/oder äußerem Umfangsrand ein Versteifungsring vorgesehen ist.

Aufgabe der Erfindung ist es daher, einen Dichtring aus elastomerem Werkstoff mit Versteifungseinlage zu schaffen, der auch bei zunehmender Belastung einwandfrei abdichtet und dabei einfach und materialsparend aufgebaut ist.

Diese Aufgabe wird durch die Merkmale des Anspruchs 1 gelöst.

Hierdurch wird ein Dichtring aus einem elastomeren Werkstoff geschaffen, bei dem ein statischer Träger als Einlage von dem Elastomer komplett umschlossen ist und der längs eines gesamtheitlichen Dichtringsteges unterteilt ist in mindestens einen inneren Dichtringstegabschnitt und einem äußeren Dichtringstegabschnitt. Der innere Dichtringstegabschnitt nimmt die Einlage auf und weist gerichtet zum Innendurchmesser des Dichtrings eine umlaufende Elastomerrippe auf. Der an den inneren Dichtringstegabschnitt nach außen anschließende äußere Dichtringstegabschnitt bildet als ein einlagenloser Elastomerumfangsschaft ein quasi statisches Reservoir aus, das zusätzlich die Funktion einer Zentrierhilfe haben kann.

Die Kombination aus einem elastomeren Halbzeugbauteil mit einem gegebenenfalls mit oder ohne Haftvermittler beschichteten, statischen Träger, welcher zuvor beispielsweise manuell oder auch maschinell in ein beispielsweise noch einseitig geöffnetes Halbzeug eingelegt wird, wird in eine erfindungsgemäße, vorzugweise zweiteilige, einer Endgeometrie des Dichtringes entsprechenden Form eingelegt und thermisch ausvulkanisiert. Durch eine vorzugsweise passgenaue Fügung in einer Vulkanisationsform sowie durch eine gegebenenfalls erfindungsgemäße Profilierung des elastomeren Halbzeugbauteils mit Fasen, die vorzugsweise zum Innendurchmesser des Dichtrings hin mit Steigung und mit Gefälle ausgebildet sind, kann es während des Vulkanisationsprozesses zu einer thermisch bedingten fluidisierenden Selbstzentrierung des eingelegten statischen Trägers kommen, welcher bei einem nachfolgenden Aushärten des Elastomers in Verbindung mit einem Abkühlprozess unverrückbar zentrisch fixiert wird.

Der erfindungsgemäße Dichtring kann bei einer primären Montage so verpresst werden, dass die Rautiefen eines Flanschblattes nicht in Kontakt mit der statischen Einlage gelangen. Hierbei arbeitet der Dichtring nach dem Prinzip des Krafthauptschlusses und trägt über das Elastomer die auftretenden Kräfte, z.B. Rohrleitungskräfte, Flanschblatt-/Schraubenkräfte, Prozessdruckschwankungen, usw. sicher ab. Bei sehr großen Belastungen kann der Anpressdruck so erhöht werden, dass die Rautiefen des Flanschblattes in Blocklage zu der statischen Einlage des Dichtringes kommen können und somit die noch wesentlich höher belastbare Form des Kraftnebenschlusses entstehen kann und die bereits genannten Kräfte über die Blocklage sicher abgetragen werden können. Eine Korrosion der betreffenden Ebenen des Flanschblattes als auch der des statischen Trägers sind auszuschließen, da das Elastomer hier bereits vollumfänglich abdichtet und höchste Leckageklassen ermöglicht werden.

Durch die erfindungsgemäße mit Fasen profilierte Darstellung des inneren Dichtringstegabschnitts mit anschließendem äußerem Dichtringstegabschnitt als einem statischen Reservoir werden bei Verpressung die Kräfte zuerst im inneren Dichtringstegabschnitt als einem Dichtringsteg-Profil aufgenommen. Da sich ein Elastomer innerhalb seiner physikalischen und chemischen Einsatzgrenzen wie eine Newton'sche Flüssigkeit verhält, können überschüssige Elastomeranteile in einen Bereich benachbart des inneren Dichtringstegabschnitts und damit in den Bereich der inneren und äußeren Dichtungsgeometrie fließen. Da am inneren Dichtringstegabschnitt die ansteigende Fase vorzugsweise steiler ausgebildet ist als die abfallende Fase, wird ein Elastomerfluss bevorzugt in Richtung äußerem Dichtringstegabschnitt, d.h. in Richtung des statischen Reservoirs, also nach außen stattfinden. Durch dieses volumenoptimierte Verhalten von inkompressiblen Systemen - hier Elastomere - kommt es zu keiner oder nur geringer Intrusion in den Ringraum des Flansches sowie Extrusion in den inneren Schraubenkreisdurchmesser des Flanschblattes bei gleichmäßiger Füllung aller Hohlräume zwischen den Flanschblättern bei entsprechender statischer Last. Der erfindungsgemäße Dichtring ist folglich bei geringsten Pressungen (< 1 MPa) und/oder größten Pressungen für elastomere Systeme (bis ca. 50 MPa) statisch stabil und sicher dichtend.

Der erfindungsgemäße Dichtring ermöglicht eine deutliche Reduktion des notwendigen elastomeren Materials und damit im Ergebnis eine starke Entlastung der Umwelt durch erhebliche Reduktion an thermischer Energie für die Vulkanisation. Der Dichtring kann in wählbaren Abmessungen hergestellt werden und ist für alle flanschartigen Dichtverbindungselemente, wie beispielsweise EN, ANSI, ASME, OEM, usw. geeignet.

Ferner kann durch eine Optimierung der Stahleinlage mit kleineren Innen- sowie Außendurchmessern das Stahlvolumen reduziert werden. Bei kleineren Ringdurchmessern erhöht sich gleichzeitig die statische Sicherheit und somit die Belastungsfähigkeit.

Als elastomere Werkstoffe verwendbar sind beispielsweise Gummi, Ethylen-Propylen-Dien-Kautschuk (EPDM), Nitrilkautschuk (NBR), Fluor-Kautschuk (FKM), usw.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

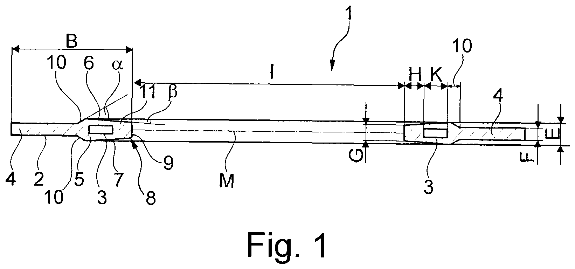

Fig. 1 zeigt schematisch einen Querschnitt eines erfindungsgemäßen Dichtrings.

Fig. 1 zeigt einen Dichtring 1 für einen Krafthauptschluss in Flanschverbindungen für den Behälter- und Rohrleitungsbau. Der Dichtring 1 umfasst einen als geschlossenen Ring ausgebildeten Dichtkörper 2 aus einem elastomeren Werkstoff, der eine senkrecht zur Druckrichtung flach in der Ringebene M liegende Einlage 3 aus steifem Werkstoff allseitig umhüllt. Die Einlage 3 ist eine statische Einlage.

Der Dichtkörper 2 weist innerhalb einer Gesamtstegbreite B des Dichtrings 1 mindestens einen äußeren Dichtringstegabschnitt 4 und einen inneren Dichtringstegabschnitt 5 auf. Der innere Dichtringstegabschnitt 5 enthält die flach in der Ringebene M liegende Einlage 3. Der innere Dichtringstegabschnitt 5 weist ferner axial beidseitig zur Ringebene M und ansteigend abgefast gegenüber dem äußeren Dichtringstegabschnitt 4 erhaben positionierte Plateauflächen 6, 7 auf. Die Plateauflächen 6, 7 erstrecken sich vorzugsweise ober- und unterhalb der Einlage 3. Die Plateauflächen 6, 7 gehen zudem abfallend abgefast in eine ringförmige Elastomerrippe 8 benachbart zum Innendurchmesser I des Dichtrings 1 über.

Der äußere Dichtringstegabschnitt 4 ist vorzugsweise flachdichtungsmäßig eben ausgedehnt ausgebildet. Die Elastomerrippe 8 ist vorzugsweise als eine keilförmige Ringrippe mit einer stumpfen Spitze 9 ausgebildet.

Die innen- und außenseitig abgefaste Ausbildung des inneren Dichtringstegabschnitts 5 ist vorzugsweise wie folgt. Eine ringförmig verlaufende erste Fase 10 zwischen dem äußeren Dichtringstegabschnitt 4 und dem inneren Dichtringstegabschnitt 5 ist vorzugsweise steiler ausgebildet als eine ringförmig verlaufende zweite Fase 11 an der Elastomerrippe 8. Die erste Fase 10 weist vorzugsweise einen Steigwinkel α im Bereich von 20° bis 40° auf. Die zweite Fase 11 weist vorzugsweise einen Fallwinkel β im Bereich von 3° bis 10° auf.

Die Elastomerrippe 8 ist vorzugsweise so dimensioniert, dass diese endseitig an der Spitze 9 eine Dicke G am Innendurchmesser aufweist, die größer ist als eine Dicke F des äußeren Dichtringstegabschnitts 4 am Außendurchmesser.

Der äußere Dichtringstegabschnitt 4 kann 30 bis 70 % der Gesamtstegbreite einnehmen, so dass die Einlage 3 außermittig positionierbar ist, und zwar insbesondere benachbart dem Innendurchmesser I des Dichtrings 1 angeordnet sein kann. Der innere Dichtringstegabschnitt 5 nimmt dann die Einlage 3 bezogen auf die Gesamtstegbreite des Dichtrings 1 außermittig versetzt benachbart zum Innendurchmesser I des Dichtrings 1 auf.

Der äußere Dichtringstegabschnitt 4 und der innere Dichtringstegabschnitt 5 teilen die Gesamtstegbreite des Dichtrings 1 vorzugsweise in zwei planflächige Bereiche mit einem mittleren aufsteigenden Übergangsbereich durch die erste Fase 10 und einem absteigenden Randbereich durch die zweite Fase 11 hin zum Innendurchmesser I des Dichtrings 1 über die Elastomerrippe 8. Eine größte Dichtringdicke E liegt vorzugsweise über dem Außendurchmesser der Einlage 3, deren Stegbreite K in Fig. 1 beispielhaft angegeben ist. Die Distanz vom Innendurchmesser I des Dichtrings 1 zu einem Innendurchmesser der Einlage 3 ist in Fig. 1 mit H bezeichnet und definiert beispielsweise eine Stegbreite der Elastomerrippe 8.

Der steife Werkstoff kann ein Metall und/oder eine Legierung, insbesondere Stahl, Edelstahl, Kupfer, Titan, oder ein Kunststoff, insbesondere GFK, PET, sein. Die Einlage 3 kann ein geschlossen ausgebildeter Stahlring sein. Die Einlage 3 weist vorzugsweise einen rechteckigen Querschnitt auf. Dies ist vorteilhaft für Anwendungen, bei denen der Dichtring 1 bei der Montage in eine Blocklage gelangt. Der rechteckige Querschnitt der Einlage 3 definiert weiterhin in radialer Richtung eine vordere randseitige Umfangsfläche und eine hintere randseitige Umfangsfläche, die stützende Aufstandsflächen für die erste und zweite Fase 10, 11 bilden können.

Der elastomere Werkstoff kann ein Gummi oder ein synthetischer Kautschuk sein. Die Shore A-Härte liegt vorzugsweise bei 60° bis 90°.

Der erfindungsgemäße Dichtring 1 kann je nach Anwendungszweck mit wählbaren Außendurchmessern, insbesondere 15 bis 2000 mm, und zugehörigen Dichtringdicken ausgebildet werden.

## Patentansprüche

1. Dichtring (1) für einen Krafthauptschluss in Flanschverbindungen für den Behälter- und Rohrleitungsbau, umfassend einen als geschlossenen Ring ausgebildeten Dichtkörper (2) aus einem elastomeren Werkstoff, der eine senkrecht zur Druckrichtung flach in der Ringebene (M) liegende Einlage (3) aus einem steifem Werkstoff allseitig umhüllt, wobei der Dichtkörper (2) innerhalb einer Gesamtstegbreite des Dichtrings (1) mindestens einen äußeren Dichtringstegabschnitt (4) und einen inneren Dichtringstegabschnitt (5) aufweist, der innere Dichtringstegabschnitt (5) die Einlage (3) enthält und der innere Dichtringstegabschnitt (5) axial beidseitig zur Ringebene (M) und ansteigend abgefast gegenüber dem äußeren Dichtringstegabschnitt (4) erhaben positionierte Plateauflächen (6, 7) aufweist, die abfallend abgefast in eine ringförmige Elastomerrippe (8) benachbart zum Innendurchmesser (I) des Dichtrings (1) übergehen, **dadurch gekennzeichnet, dass** die Elastomerrippe (8) randseitig eine Dicke (G) aufweist, die größer ist als die Dicke (E) des äußeren Dichtringstegabschnitts (4).

2. Dichtring (1) nach Anspruch 1, **dadurch gekennzeichnet, dass** der äußere Dichtringstegabschnitt (4) flachdichtungsmäßig eben ausgedehnt ausgebildet ist.

3. Dichtring (1) nach Anspruch 1 oder 2, **dadurch gekennzeichnet, dass** die Elastomerrippe (8) als keilförmige Ringrippe mit einer stumpfen Spitze (9) ausgebildet ist.

4. Dichtring (1) nach einem der Ansprüche 1 bis 3, **dadurch gekennzeichnet, dass** eine ringförmig verlaufende erste Fase (10) zwischen dem äußeren Dichtringstegabschnitt (4) und dem inneren Dichtringstegabschnitt (5) steiler ausgebildet ist als eine ringförmig verlaufende zweite Fase (11) an der Elastomerrippe (8).

5. Dichtring (1) nach Anspruch 4, **dadurch gekennzeichnet, dass** die erste Fase (10) einen Steigwinkel α im Bereich von 20° bis 40° und die zweite Fase (11) einen Fallwinkel β im Bereich von 3° bis 10° aufweist.

6. Dichtring (1) nach einem der Ansprüche 1 bis 5, **dadurch gekennzeichnet, dass** der äußere Dichtringstegabschnitt (4) über eine schräge Ringkante einer Fase (10) auf eine Höhe der Plateauflächen (6, 7) ansteigt.

7. Dichtring (1) nach einem der Ansprüche 1 bis 6, **dadurch gekennzeichnet, dass** der äußere Dichtringstegabschnitt (4) 30 bis 70 % der Gesamtstegbreite einnimmt.

8. Dichtring (1) nach einem der Ansprüche 1 bis 7, **dadurch gekennzeichnet, dass** der innere Dichtringstegabschnitt (5) die Einlage (3) bezogen auf die Gesamtstegbreite des Dichtrings (1) außermittig versetzt benachbart zum Innendurchmesser (I) des Dichtrings (1) aufnimmt.

9. Dichtring (1) nach einem der Ansprüche 1 bis 8, **dadurch gekennzeichnet, dass** der äußere Dichtringstegabschnitt (4) und der innere Dichtringstegabschnitt (5) die Gesamtstegbreite des Dichtrings (1) in zwei planflächige Bereiche mit einer mittleren aufsteigenden Fase (10) und einer absteigenden Fase (11) hin zum Innendurchmesser (I) des Dichtrings (1) ausbilden.

10. Dichtring (1) nach einem der Ansprüche 1 bis 9, **dadurch gekennzeichnet, dass** der steife Werkstoff ein Metall und/oder eine Legierung, insbesondere Stahl, Edelstahl, Kupfer, Titan, oder ein Kunststoff, insbesondere GFK, PET, ist.

11. Dichtring (1) nach einem der Ansprüche 1 bis 10, **dadurch gekennzeichnet, dass** die Einlage (3) ein geschlossen ausgebildeter Stahlring ist.

12. Dichtring (1) nach einem der Ansprüche 1 bis 11, **dadurch gekennzeichnet, dass** der elastomere Werkstoff ein Gummi oder ein synthetischer Kautschuk ist.

13. Dichtring (1) nach einem der Ansprüche 1 bis 12, **dadurch gekennzeichnet, dass** die Einlage (3) einen rechteckigen Querschnitt aufweist.

## Claims

1. Sealing ring (1) for a main power connection in flange connections for container and pipeline construction, comprising a sealing body (2) composed of an elastomer material, which is in the form of a closed ring and envelops on all sides an insert (3) composed of a rigid material, which lies flat in the plane of the ring (M) perpendicular to the pressure direction, wherein the sealing body (2) has within a total web width of the sealing ring (1) at least one outer sealing-ring web portion (4) and one inner sealing-ring web portion (5), the inner sealing-ring web portion (5) contains the insert (3), and the inner sealing-ring web portion (5) has plateau surfaces (6, 7) which are positioned so as to be raised in relation to the outer sealing-ring web portion (4) axially on both sides of the plane of the ring (M) and in an upwardly bevelled manner and which merge, in a downwardly bevelled manner, into an annular elastomer rib (8) adjacent to the inner diameter (I) of the sealing ring (1), **characterized in that**, on the boundary side, the elastomer rib (8) has a thickness (G) which is greater than the thickness (E) of the outer sealing-ring web portion (4).

2. Sealing ring (1) according to Claim 1, **characterized in that** the outer sealing-ring web portion (4) extends in planar form in the manner of a flat seal.

3. Sealing ring (1) according to Claim 1 or 2, **characterized in that** the elastomer rib (8) is configured as a wedge-shaped annular rib having a blunt tip (9).

4. Sealing ring (1) according to one of Claims 1 to 3, **characterized in that** an annularly extending first bevel (10) between the outer sealing-ring web portion (4) and the inner sealing-ring web portion (5) is steeper than an annularly extending second bevel (11) on the elastomer rib (8).

5. Sealing ring (1) according to Claim 4, **characterized in that** the first bevel (10) has a climbing angle α in the range from 20° to 40°, and the second bevel (11) has a falling angle β in the range from 3° to 10°.

6. Sealing ring (1) according to one of Claims 1 to 5, **characterized in that** the outer sealing-ring web portion (4) ascends to a height of the plateau surfaces (6, 7) via an inclined annular edge of a bevel (10).

7. Sealing ring (1) according to one of Claims 1 to 6, **characterized in that** the outer sealing-ring web portion (4) takes up 30 to 70% of the total web width.

8. Sealing ring (1) according to one of Claims 1 to 7, **characterized in that** the inner sealing-ring web portion (5) accommodates the insert (3) adjacent to the inner diameter (I) of the sealing ring (1) in an eccentrically offset manner with respect to the total web width of the sealing ring (1).

9. Sealing ring (1) according to one of Claims 1 to 8, **characterized in that** the outer sealing-ring web portion (4) and the inner sealing-ring web portion (5) form the total web width of the sealing ring (1) into two planar regions with a central ascending bevel (10) and a descending bevel (11) towards the inner diameter (I) of the sealing ring (1).

10. Sealing ring (1) according to one of Claims 1 to 9, **characterized in that** the rigid material is a metal and/or an alloy, in particular steel, stainless steel, copper, titanium, or a plastic, in particular GRP, PET.

11. Sealing ring (1) according to one of Claims 1 to 10, **characterized in that** the insert (3) is a closed steel ring.

12. Sealing ring (1) according to one of Claims 1 to 11, **characterized in that** the elastomer material is a rubber or a synthetic rubber.

13. Sealing ring (1) according to one of Claims 1 to 12, **characterized in that** the insert (3) has a rectangular cross section.

## Revendications

1. Bague d'étanchéité (1) pour une liaison principale à force dans des liaisons bridées pour la construction de récipient et de conduite, comprenant un corps étanche (2) réalisé comme bague fermée en un matériau élastomère qui entoure de tous les côtés un insert (3) en un matériau rigide se trouvant perpendiculaire au sens de pression à plat dans le plan de bague (M), dans laquelle le corps étanche (2) présente dans une largeur de nervure entière de la bague d'étanchéité (1) au moins une section de nervure de bague d'étanchéité extérieure (4) et une section de nervure de bague d'étanchéité intérieure (5) la section de nervure de bague d'étanchéité intérieure (5) contient l'insert (3) et la section de nervure de bague d'étanchéité intérieure (5) présente des surfaces de plateau (6, 7) positionnées en relief axialement de part et d'autre du plan de bague (M) et chanfreinées de manière croissante par rapport à la section de nervure de bague d'étanchéité extérieure (4), qui passent de manière contiguë au diamètre intérieur (I) de la bague d'étanchéité (1) en étant chanfreinées de manière décroissante en une ailette en élastomère (8) annulaire, **caractérisée en ce que** l'ailette en élastomère (8) présente côté bord une épaisseur (G) qui est supérieure à l'épaisseur (E) de la section de nervure de bague d'étanchéité extérieure (4).

2. Bague d'étanchéité (1) selon la revendication 1, **caractérisée en ce que** la section de nervure de bague d'étanchéité extérieure (4) est réalisée en étant étirée à plat selon une garniture plate.

3. Bague d'étanchéité (1) selon la revendication 1 ou 2, **caractérisée en ce que** l'ailette en élastomère (8) est réalisée comme ailette annulaire cunéiforme avec une pointe émoussée (9).

4. Bague d'étanchéité (1) selon l'une des revendications 1 à 3, **caractérisée en ce qu'**un premier chanfrein (10) s'étendant en anneau est réalisé entre la section de nervure de bague d'étanchéité extérieure (4) et la section de nervure de bague d'étanchéité intérieure (5) de manière plus raide qu'un second chanfrein (11) s'étendant en anneau au niveau de l'ailette en élastomère (8).

5. Bague d'étanchéité (1) selon la revendication 4, **caractérisée en ce que** le premier chanfrein (10) présente un angle de montée α dans la plage de 20° à 40° et le second chanfrein (11) présente un angle de chute β dans la plage de 3° à 10°.

6. Bague d'étanchéité (1) selon l'une des revendications 1 à 5, **caractérisée en ce que** la section de nervure de bague d'étanchéité extérieure (4) monte sur une arête annulaire inclinée d'un chanfrein (10) à une hauteur des surfaces de plateau (6, 7).

7. Bague d'étanchéité (1) selon l'une des revendications 1 à 6, **caractérisée en ce que** la section de nervure de bague d'étanchéité extérieure (4) occupe 30 à 70 % de la largeur de nervure entière.

8. Bague d'étanchéité (1) selon l'une des revendications 1 à 7, **caractérisée en ce que** la section de nervure de bague d'étanchéité intérieure (5) reçoit l'insert (3) par rapport à la largeur de nervure entière de la bague d'étanchéité (1) en déport décentré de manière contiguë au diamètre intérieur (I) de la bague d'étanchéité (1).

9. Bague d'étanchéité (1) selon l'une des revendications 1 à 8, **caractérisée en ce que** la section de nervure de bague d'étanchéité extérieure (4) et la section de nervure de bague d'étanchéité intérieure (5) réalisent la largeur de nervure entière de la bague d'étanchéité (1) dans deux zones à surface plane avec un chanfrein ascendant médian (10) et un chanfrein descendant (11) vers le diamètre intérieur (I) de la bague d'étanchéité (1).

10. Bague d'étanchéité (1) selon l'une des revendications 1 à 9, **caractérisée en ce que** le matériau rigide est un métal et/ou un alliage, en particulier de l'acier, de l'acier spécial, du cuivre, du titane ou une matière plastique, en particulier du GFK, du PET.

11. Bague d'étanchéité (1) selon l'une des revendications 1 à 10, **caractérisée en ce que** l'insert (3) est une bague d'acier réalisée de manière fermée.

12. Bague d'étanchéité (1) selon l'une des revendications 1 à 11, **caractérisée en ce que** le matériau élastomère est un caoutchouc ou un caoutchouc synthétique.

13. Bague d'étanchéité (1) selon l'une des revendications 1 à 12, **caractérisée en ce que** l'insert (3) présente une section transversale rectangulaire.
